# EUROPEAN PATENT APPLICATION

(11) **EP 4 299 534 A1**
(43) Date of publication of application: **03.01.2024**
(21) Application number: 22020306.1
(22) Date of filing: 29.06.2022
(51) Int. Cl.: C02F 1/68, C02F 1/00, C02F 1/28, C02F 1/20

(54) **WATER TREATMENT AND SUPPLY DEVICE FOR ESPRESSO COFFEE MAKERS**

(71) Applicant: Smart Water SL, 17469 Girona (ES)
(72) Inventor: Fernández Campa, Josep, 17469 Riumors, Girona (ES)
(74) Representative: Mateu Prades, Maria Eugenia

(57) **Abstract**

A water treatment and supply device for espresso coffee makers, comprising: a reservoir (1) with an intake tube (12) for osmotized or demineralized water and a water supply tube (13) to the espresso coffee maker (C); a CO2 tank (2), which adds CO₂ to the water contained in the reservoir (1) increasing its remineralization capacity, and a mineralizing filter (4) for the water from the reservoir (1), installed on the water supply tube (13) to the espresso coffee maker (C). The device comprises, on the supply tube (13): a pump (3) that delivers the water to the espresso coffee maker (C), the mineralizing filter (4) of the osmotized water treated with CO2 in the reservoir (1); several means for regulating the concentration of dissolved minerals in the water; and an activated carbon filter (6) that removes CO2 from the remineralized water in the mineralizing filter (4).

## Description

The present invention relates to a water treatment and supply device for espresso coffee makers.

### State of the art

In the state of the art, there are devices used to supply water to espresso coffee makers and which use osmotized water to which they add, by means of a mineralizing filter, the appropriate minerals to obtain quality espresso coffee.

These filters achieve an increase in water mineralization of only 20 to 50 ppm, because these minerals, basically calcium carbonate, are not very soluble in water.

To solve this problem, the same applicant of the present invention, developed a water supply device for espresso coffee makers, described in the invention patent ES2757980, which has suitable technical characteristics to achieve a high remineralization of the osmotized water to be supplied to the coffee maker, specifically on the order of 120 to 125 ppm.

Said device comprises a reservoir containing osmotized water, a supply tube connecting a water outlet from the reservoir to a water intake to the espresso coffee maker, a mineralizing filter installed on the supply tube and several means for increasing the capacity to remineralize the osmotized water contained in the reservoir.

The means for increasing the capacity to remineralize the osmotized water contained in the reservoir comprise a CO2 tank, equipped with a pressure regulator with a pressure gage, and connected by means of a supply tube to a diffuser that adds CO2 to the osmotized water contained in the reservoir, increasing its remineralization capacity in the mineralizing filter; and a CO2 bubble counter installed on the CO2 supply tube to the water contained in the reservoir.

Said device supplies the coffee maker with osmotized water, free of dissolved substances that could negatively affect the quality of the coffee, and with a high degree of remineralization.

After said device had been implemented, the holder of the invention himself detected several drawbacks related to the content of the water supplied to the espresso coffee maker; specifically:
- the unstable concentration of dissolved carbonates in the water when the time between the production of one coffee and the next is prolonged,
- the presence of carbon dioxide in the water supplied to the coffee maker, which gives the coffee a slightly metallic taste.

Therefore, the technical problem that arises is the development of a water treatment and supply device for espresso coffee makers to solve the aforementioned drawbacks.

### Explanation of the invention.

The water treatment and supply device for espresso coffee makers that is the object of this invention, being of the type described in the preamble of claim one, presents the particularity of incorporating a series of additional elements which make it possible to satisfactorily solve the aforementioned drawbacks.

This device has a number of known characteristics, described in patent ES2757980 of the same holder, comprising:
- a reservoir equipped with a cover, an osmotized or demineralized water intake and an outlet connected to a water supply tube to the espresso coffee maker;
- a mineralizing filter for the water coming from the reservoir, installed on the water supply tube to the espresso coffee maker and;
- a CO2 tank, equipped with a pressure regulator and connected, by means of a supply tube equipped with a bubble counter, to a diffuser that adds CO2 to the osmotized water contained in the reservoir to increase its remineralization capacity in the mineralizing filter.

In order to solve the specified problem, this water treatment and supply device for espresso coffee makers comprises several means for regulating the concentration of dissolved minerals in the water to be supplied to the espresso coffee maker.

In a first embodiment, the means for regulating the concentration of dissolved minerals in the water comprise a timed device to purge the mineralizing filter, which regulates the amount of water purged and the time between purges.

In this embodiment, the device comprises a pump on the supply tube to pump the osmotized water from the reservoir to the coffee maker, previously passing through the mineralizing filter, the purging zone and an activated carbon filter to remove CO2 from the remineralized water.

According to the invention, the timed purge device, located downstream from the mineralizing filter, comprises a purge valve actuated by a timer that controls the time between purges. These purges ensure that the mineralization of the water used to make coffee remains within certain parameters, regardless of the time that elapses between the preparation of the coffee.

In a second embodiment the device, in addition to the first reservoir in which CO2 is added to the osmotized water, there is a second reservoir for the accumulation of the mineralized water between the mineralizing filter and the activated carbon filter. In this second embodiment, the means for regulating the concentration of minerals in the water to be supplied to the coffee maker comprise a regulator of the flow and pump operating time according to the water consumption of the coffee maker, and a regulator of the CO2 flow. This second reservoir includes an overflow to drain excess water that is not consumed in the espresso coffee maker.

In both embodiments, the device of the invention has an activated carbon filter located downstream from the mineralizing filter and which removes CO2 from the water remineralized in said mineralizing filter, since at this point, CO2 is no longer needed because the water has already passed through the mineralizing filter.

This elimination of CO2 from the remineralized water prevents the prepared coffee from acquiring the metallic taste mentioned above.

### Brief description of the content of the figures.

To complement the description being made and in order to facilitate the understanding of the characteristics of the invention, the present description is accompanied by a set of drawings in which, for the purposes of illustration and not limitation, the following have been represented:
- Figure 1 shows a diagram of an exemplary embodiment of the water treatment and supply device for espresso coffee makers, according to the invention.
- Figure 2 shows a diagram of an alternative embodiment of the water treatment and supply device for espresso coffee makers, according to the invention.

### Detailed description of the embodiments of the invention.

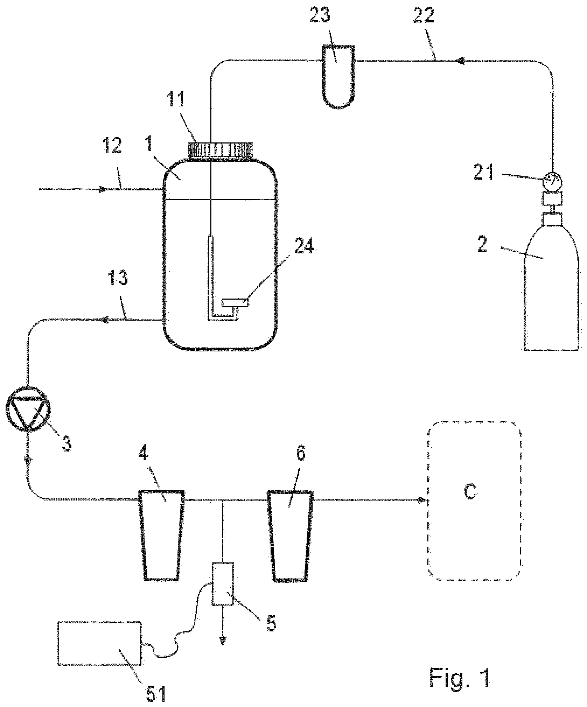

In the exemplary embodiment shown in figure 1, the water treatment and supply device for espresso coffee makers comprises: a reservoir (1) equipped with: a cover (11), an intake tube (12) for osmotized or demineralized water and an outlet connected to a water supply tube (13) to the espresso coffee maker (C); and a CO2 tank (2), equipped with a pressure regulator (21) with a pressure gage and connected by means of a supply tube (22), equipped with a bubble counter (23), with a diffuser (24) located inside the reservoir (1) and which adds CO2 to the osmotized water contained in said reservoir increasing its remineralization capacity.

The following are installed on the water supply tube (13) to the espresso coffee maker: a pump (3) responsible for delivering the water to the espresso coffee maker (C), the mineralizing filter (4) of the osmotized water treated with CO2 in the reservoir (1) to increase its remineralization capacity; a timed purge device (5, 51) whose function is to regulate the concentration of dissolved minerals in the water to be supplied to the espresso coffee maker (C), and an activated carbon filter (6) which removes the CO2 from the water that was previously remineralized in the mineralizing filter (4), preventing said CO2 from modifying the taste of the coffee prepared in the espresso coffee maker and giving it a metallic taste.

In the example shown, the purging device comprises a solenoid valve (5) activated by a timer (51) that regulates the time between successive purges of the mineralizing filter (4).

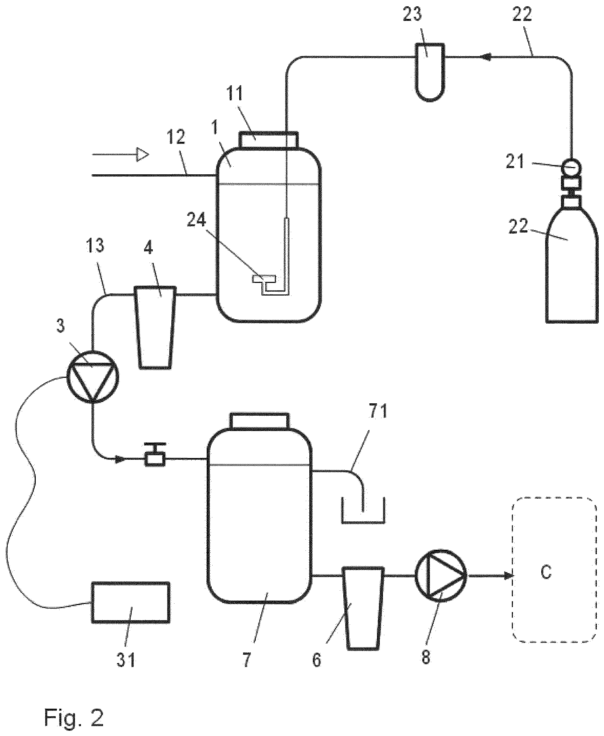

In the exemplary embodiment shown in Figure 2, the treatment device, instead of the purge device, comprises a second reservoir (7) for the accumulation of the mineralized water between the mineralizing filter (4) and the activated carbon filter (6). This second reservoir (7) comprises an overflow (71) to drain excess water that is not used by the coffee maker. The device comprises, between the second reservoir (7) and the coffee maker (C), a second pump (8) for supplying the treated water to the coffee maker (C).

In this second exemplary embodiment, the concentration of minerals in the water to be supplied to the coffee maker from the second reservoir (7) is regulated by regulating the flow of CO2 supplied to the osmotized water contained in the reservoir (1) and by means of a regulator (31) of the flow and operating time of the pump (3) according to the water consumption of the coffee maker (C).

Having sufficiently described the nature of the invention, as well as a preferred embodiment, it is hereby stated for the appropriate purposes that the materials, shape, size and arrangement of the elements described may be modified, provided that this does not involve an alteration of the essential characteristics of the invention claimed below.

## Claims

1. . A water treatment and supply device for espresso coffee makers; comprising:
- a reservoir (1) equipped with: a cover (11), an intake tube (12) for osmotized or demineralized water and an outlet connected to a water supply tube (13) to the espresso coffee maker (C).
- a CO2 tank (2), equipped with a pressure regulator (21) and connected, by means of a supply tube (22) equipped with a bubble counter (23), to a diffuser (24), which adds CO2 to the osmotized water in the reservoir (1) increasing its remineralization capacity,
- a mineralizing filter (4) of the water coming from the reservoir (1), installed on the water supply tube (13) to the espresso coffee maker (C); **characterized in that** it comprises, on the water supply tube (13) to the espresso coffee maker: a pump (3) responsible for delivering the water to the espresso coffee maker (C), the mineralizing filter (4) of the osmotized water treated with CO2 in the reservoir (1); several means for regulating the concentration of dissolved minerals in the water to be supplied to the espresso coffee maker (C) and, an activated carbon filter (6) which removes CO2 from the water remineralized in the mineralizing filter (4).

2. . The device, according to claim 1, wherein the means for regulating the concentration of dissolved minerals in the water to be supplied to the espresso coffee maker (C) comprise a timed purging device of the mineralizing filter (4).

3. . The device according to claim 2, wherein the timed purging device of the mineralizing filter (4) comprises a solenoid valve (5) activated by a timer (51).

4. . The device according to claim 1, comprising, between the mineralizing filter (4) and the activated carbon filter (6), a second reservoir (7) for the accumulation of the mineralized water, equipped with an overflow (71).

5. . The device according to claims 1 and 4, wherein the means for regulating the concentration of minerals in the water to be supplied to the coffee maker comprise a regulator (31) of the flow and operating time of the pump (3).

6. . The device, according to claims 4 and 5, comprising, between the second reservoir (7) and the coffee maker (C), a second pump (8) for supplying the treated water to the coffee maker (C).

## Amended claims

### Amended claims in accordance with Rule 137(2) EPC.

1. A water treatment and supply device for espresso coffee makers; comprising:
- a reservoir (1) equipped with: a cover (11), an intake tube (12) for osmotized or demineralized water and an outlet connected to a water supply tube (13) to the espresso coffee maker (C).
- a CO2 tank (2), equipped with a pressure regulator (21) and connected, by means of a supply tube (22) equipped with a bubble counter (23), to a diffuser (24), which adds CO2 to the osmotized water in the reservoir (1) increasing its remineralization capacity,
- a mineralizing filter (4) of the water coming from the reservoir (1), installed on the water supply tube (13) to the espresso coffee maker (C); **characterized in that** it comprises, on the water supply tube (13) to the espresso coffee maker: a pump (3) responsible for delivering the water to the espresso coffee maker (C), the mineralizing filter (4) of the osmotized water treated with CO2 in the reservoir (1); several means for regulating the concentration of dissolved minerals in the water to be supplied to the espresso coffee maker (C) and, an activated carbon filter (6), located downstream from the mineralizing filter (4), which removes CO2 from the water remineralized in the mineralizing filter (4).

2. The device, according to claim 1, wherein the means for regulating the concentration of dissolved minerals in the water to be supplied to the espresso coffee maker (C) comprise a timed purging device of the mineralizing filter (4).

3. The device according to claim 2, wherein the timed purging device of the mineralizing filter (4) comprises a solenoid valve (5) activated by a timer (51).

4. The device according to claim 1, comprising, between the mineralizing filter (4) and the activated carbon filter (6), a second reservoir (7) for the accumulation of the mineralized water, equipped with an overflow (71) and located downstream from the pump (3); and wherein the means for regulating the concentration of minerals in the water to be supplied to the coffee maker comprise a regulator (31) of the flow and operating time of the pump (3).

5. The device, according to claim 4 , comprising, between the second reservoir (7) and the coffee maker (C), a second pump (8) for supplying the treated water to the coffee maker (C).
